# FASCICULE DE BREVET EUROPEEN

(11) **EP 0 521 763 B1**
(45) Date de publication et mention de la délivrance du brevet: **02.04.1997**
(21) Numéro de dépôt: 92401837.7
(22) Date de dépôt: 29.06.1992
(51) Int. Cl.: H01S 3/06, H01S 3/23

(54) **Réduction du bruit optique dans une fibre optique amplificatrice**
Verminderung des optischen Rauschens in einem optischen Faserverstärker
Optical noise reduction in optical fibre amplifier

(30) Priorité: 02.07.1991 FR 9108226
(43) Date de publication de la demande: 07.01.1993
(73) Titulaire: ALCATEL N.V., NL-1077 XX Amsterdam (NL)
(72) Inventeur: Marcerou, Jean-François, F-91080 Courcouronnes (FR); Fevrier, Hervé, F-91300 Massy (FR)
(74) Mandataire: Laroche, Danièle

(56) Documents cités:
- IEEE PHOTONICS TECHNOLOGY LETTERS vol. 2, no. 12, 1990, NEW YORK pages 866 - 868; GILES ET AL.: 'DYNAMIC GAIN EQUALIZATION IN TWO-STAGE FIBER AMPLIFIERS'
- ELECTRONICS LETTERS. vol. 26, no. 10, 10 Mai 1990, STEVENAGE GB pages 661 - 662; MASUDA ET AL.: 'HIGH GAIN TWO-STAGE AMPLIFICATION WITH ERBIUM DOPED FIBRE AMPLIFIER'
- IEEE PHOTONICS TECHNOLOGY LETTERS vol. 2, no. 11, 1990, NEW YORK pages 787 - 789; MAEDA ET AL.: 'AN ELECTRONICALLY TUNABLE FIBER LASER WITH A LIQUID-CRYSTAL
- ETALON FILTER AS THE WAVELENGTH-TUNING ELEMENT'

## Description

La présente invention concerne un amplificateur à fibre optique amplificatrice, par exemple par dopage à l'erbium. Un tel amplificateur trouve une application notamment dans les systèmes de transmissions sous-marines à fibre optique.

On connaît des amplificateurs à fibres optiques dopées à l'erbium, par exemple par le document FR 2 638 854, ainsi que les systèmes de transmissions sous-marines associés. Ces amplificateurs permettent l'obtention de gains élevés par simple passage du signal dans une fibre optique et ceci pour le domaine spectral 1,5 - 1,6 µm. Cependant il est connu (voir J.F. MARCEROU et al., Proceedings SPIE 1373, pp. 168-186, 1991) que l'amplificateur à fibre optique dopée à l'erbium se trouve limité, lorsqu'on veut l'exploiter pleinement, par le bruit optique qu'il génère et appelé "émission spontanée amplifiée" (ASE selon le sigle anglo-saxon). L'émission spontanée amplifiée est alors responsable d'une partie de la saturation du milieu laser, ce qui se fait au détriment de l'amplification du ou des signaux présents sur la fibre optique. C'est d'ailleurs pour cette raison qu'elle est utilisée pour réaliser d'excellentes sources superfluorescentes à bande large.

Plusieurs solutions ont déjà été proposées pour résoudre ce problème. Pour réduire le facteur de bruit, on peut utiliser des fibres courtes mais cela pénalise le gain. On peut également utiliser des fibres non optimisées mais cela requiert des puissances de pompage trop élevées.

On a également proposé de limiter l'effet de l'émission spontanée amplifiée dans les amplificateurs par l'introduction d'un filtre optique situé dans la longueur de la fibre dopée à l'erbium. Le filtre optique bloque dans les deux sens une composante spectrale du bruit. Cependant, cette méthode présente l'inconvénient de limiter la bande passante de l'amplificateur et présente des risques quand on utilise des cascades d'amplificateurs, ces risques étant dus au fait qu'il existe de légers décalages en fréquence d'un filtre à l'autre.

IEEE Photonics Technology Letters, vol. 2, no. 12, décembre 1990, pages 866-868, décrit amplificateur à fibre à deux étages avec un isolateur optique disposé entre les deux étages dans le but de supprimer le bruit induit par réflexion.

Afin de pallier ces inconvénients, on propose selon la présente invention telle que définie dans la revendication 1 d'utiliser un isolateur, simple ou multiple, et de l'insérer au sein de la fibre optique amplificatrice. Ceci permet de réduire le rôle néfaste du bruit optique.

Dans le cas d'un système de transmissions sous-marines, la fibre amplificatrice sera avantageusement du type fibre optique dopée à l'erbium.

L'invention sera mieux comprise et d'autres avantages et particularités apparaîtront à la lecture de la description qui va suivre, donnée à titre non limitatif, accompagnée des dessins annexés parmi lesquels :
- la figure 1 représente un amplificateur à fibre optique amplificatrice selon une réalisation de l'invention,
- la figure 2 est un diagramme comparatif donnant le gain de l'amplificateur de la figure 1 en fonction de la longueur de la fibre optique amplificatrice,
- la figure 3 est un diagramme comparatif donnant le facteur de bruit du même amplificateur en fonction de la longueur de la fibre optique amplificatrice.

De façon surprenante, la limitation du gain introduite par la présence de l'émission spontanée amplifiée est essentiellement due au bruit se propageant en sens inverse de la direction du pompage optique. Selon l'invention, on peut très nettement diminuer cet effet par l'introduction, au sein même de la fibre dopée, d'un isolateur limitant la saturation du gain due au bruit optique se propageant en sens inverse du signal.

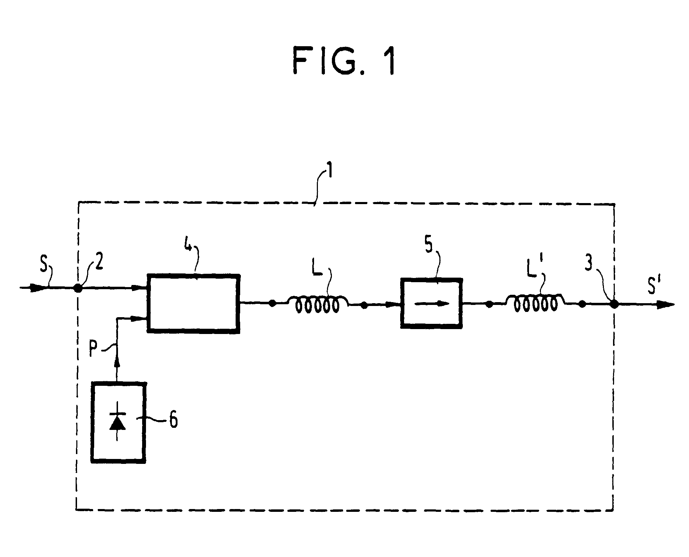

En se référant à la figure 1, l'amplificateur 1 comprend en série, entre la borne d'entrée 2 du signal optique à amplifier S et la borne de sortie 3 du signal optique S', un multiplexeur en longueur d'onde 4, une première longueur L de fibre optique dopée, un isolateur 5 et une seconde longueur L' de fibre optique dopée. Les différents éléments composant l'amplificateur sont reliés entre eux par soudure. Le multiplexeur 4 assure le couplage entre le signal optique S, de longueur d'onde λs, à amplifier et le signal de pompe P, de longueur d'onde λp. Les deux signaux S et P sont introduits à l'entrée de la fibre optique amplificatrice L, L'.

Dans cet exemple de réalisation, la fibre optique amplificatrice comporte une matrice vitreuse du coeur à base de silice additionnée d'oxydes du type Al₂O₃ et GeO₂. Elle est dopée à l'erbium avec une teneur de 100 ppm. L'écart d'indice Δn entre le coeur de la fibre et sa gaine vaut 32.10⁻³.

L'amplificateur comprend également un dispositif 6 générant le signal de pompe. Ce dispositif comprend par exemple une diode laser délivrant un signal de pompe de 1,475 µm de longueur d'onde et de puissance 35 mW.

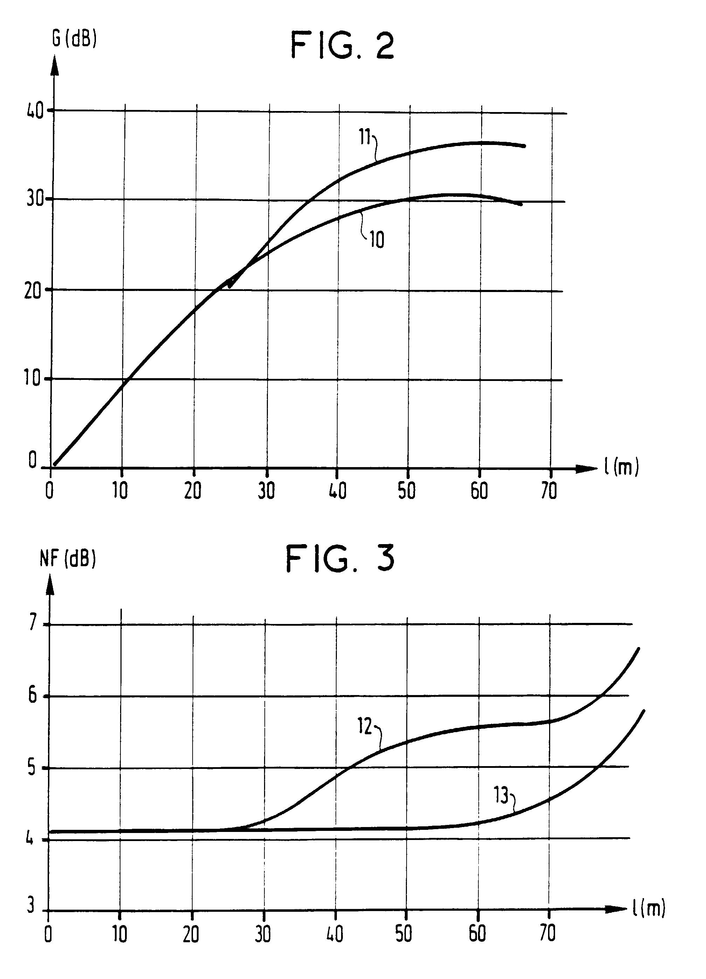

Les diagrammes des figures 2 et 3 ont été relevés pour un signal optique à amplifier de 1,55 µm de longueur d'onde et de puissance -30 dBm. Le diagramme de la figure 2 porte en axe des ordonnées le gain G de l'amplificateur, exprimé en décibels, en fonction de la longueur 1 de fibre amplificatrice, exprimée en mètres. La courbe 10 a été tracée pour des relevés faits à partir de l'amplificateur de la figure 1 sans isolateur. La courbe 11 a été tracée pour des relevés faits à partir du même amplificateur mais équipé de l'isolateur 5.

Le diagramme de la figure 3 porte en axe des ordonnées le facteur de bruit NF de l'amplificateur, exprimé en décibels, en fonction de la longueur 1. La courbe 12 a été tracée pour des relevés faits à partir de l'amplificateur de la figure 1 sans isolateur. La courbe 13 a été tracée pour des relevés faits à partir du même amplificateur mais équipé de l'isolateur 5.

L'isolateur optique permet de transmettre un signal émanant d'une source et d'atténuer fortement l'énergie en retour. Un isolateur simple peut être construit à partir d'un cube polariseur et diviseur de faisceau et d'une lame quart d'onde. La lumière incidente est polarisée par le cube, puis polarisée circulairement par la lame quart d'onde. Le faisceau en retour voit sa polarisation circulaire changer de sens. En passant dans la lame quart d'onde, il est polarisé linéairement et est bloqué par le cube polariseur.

L'isolateur optique est un composant que l'on trouve dans le commerce. Dans le cas présent, il doit être transparent aux deux longueurs d'onde (du signal à amplifier et du signal de pompe) et l'atténuation du faisceau en retour doit être supérieure à 25 dB. Le cas échéant, on peut utiliser un isolateur multiple.

Il apparaît clairement, d'après les diagrammes des figures 2 et 3, que l'amplificateur sans isolateur ne peut pas délivrer un gain comparable à celui conçu avec isolateur, et cela pour des conditions de fonctionnement par ailleurs identiques.

Le maximum de gain, dans ces conditions, apparaît vers 60 mètres (voir le diagramme de la figure 2). C'est pourquoi on a choisi de placer l'isolateur à 25 m du début de la fibre dopée (L = 25 m), ce qui correspond à environ la moitié de la longueur optimale de 60 m. Sur la courbe 11, on note un léger décrochement traduisant la perte propre à l'isolateur (environ 1,5 dB). Ce décrochement se trouve cependant largement compensé puisque, entre 50 et 60 m de longueur de fibre, le gain de l'amplificateur avec isolateur est supérieur de plus de 6 dB au gain de l'amplificateur sans isolateur.

Comme le montre le diagramme de la figure 3, le facteur de bruit peut être amélioré de plus de 1,5 dB pour l'amplificateur avec isolateur (courbe 13) par rapport à l'amplificateur sans isolateur (courbe 12). Cette différence, en termes de facteur de bruit, peut être très significative si l'amplificateur fonctionne en tant que préamplificateur à la réception ou en tant qu'amplificateur de ligne dans des chaînes comprenant plusieurs modules amplificateurs et où le problème posé par l'accumulation de l'émission spontanée amplifiée le long de cette chaîne est critique.

On peut noter que l'amplificateur selon l'invention permet l'ajout d'un filtre optique dans l'isolateur à fibre, ce filtre optique permettant le cas échéant de filtrer une partie du bruit en co-propagation.

## Revendications

1. Amplificateur à fibre optique amplificatrice (L, L'), du type à pompage en co-propagation avec le signal optique à amplifier (S) se propageant dans ladite fibre optique amplificatrice, l'amplificateur (1) comprenant des moyens de réduction du bruit optique dû à l'émission spontanée amplifiée, insérés dans la longueur de la fibre optique amplificatrice (L, L'),
**caractérisé en ce que** lesdits moyens de réduction du bruit optique comprennent un isolateur optique (5) dont la position au sein de ladite fibre optique amplificatrice est telle que ledit isolateur permet de limiter la saturation du gain due au bruit se propageant dans le sens inverse de celui dudit signal optique à amplifier (S).

2. Amplificateur selon la revendication 1 caractérisé en ce que ledit isolateur (5) est inséré à environ la moitié de la longueur dans ladite fibre amplificatrice (L, L').

3. Amplificateur selon l'une des revendications 1 ou 2 caractérisé en ce que ladite fibre optique amplificatrice (L, L') a une longueur de 60 mètres et en ce que ledit isolateur (5) est inséré dans ladite fibre optique amplificatrice à environ 25 mètres du début de ladite fibre optique amplificatrice.

4. Amplificateur selon l'une des revendications 1 à 3 caractérisé en ce que la longueur optimale de ladite fibre optique amplificatrice (L, L') correspond au maximum de gain dudit amplificateur.

5. Amplificateur selon l'une des revendications 1 à 4 caractérisé en ce que ladite fibre optique amplificatrice (L, L') est une fibre optique dopée à l'erbium.

6. Amplificateur selon l'une des revendications 1 à 5 caractérisé en ce que ledit isolateur optique est simple ou multiple.

## Patentansprüche

1. Verstärker mit einer verstärkenden Lichtleitfaser (L, L'), in der eine Pumpwelle zusammen mit dem zu verstärkenden optischen Signal (S) auf der verstärkenden Lichtleitfaser verläuft, wobei der Verstärker (1) Mittel zur Verringerung des optischen Rauschens aufgrund der verstärkten spontanen Emission besitzt, die längs in die verstärkende Lichtleitfaser (L, L') eingefügt sind,
dadurch gekennzeichnet, daß die Mittel zur Verringerung des optischen Rauschens einen optischen Isolator (5) enthalten, dessen Lage entlang der verstärkenden Lichtleitfaser so gewählt ist, daß der Isolator die Sättigung des Verstärkungsgrads aufgrund des Rauschens begrenzt, das sich in Gegenrichtung zur Richtung des zu verstärkenden optischen Signals (S) ausbreitet.

2. Verstärker nach Anspruch 1, dadurch gekennzeichnet, daß der Isolator (5) nach etwa der Hälfte der Länge der verstärkenden Lichtleitfaser (L, L') eingefügt ist.

3. Verstärker nach einem der Ansprüche 1 oder 2, dadurch gekennzeichnet, daß die verstärkende optische Faser (L, L') eine Länge von 60 Metern hat und daß der Isolator (5) in die verstärkende optische Faser etwa 25 Meter nach dem Beginn der verstärkenden Lichtleitfaser eingefügt ist.

4. Verstärker nach einem der Ansprüche 1 bis 3, dadurch gekennzeichnet, daß die optimale Länge der verstärkenden Lichtleitfaser (L, L') dem maximalen Verstärkungsgrad des Verstärkers entspricht.

5. Verstärker nach einem der Ansprüche 1 bis 4, dadurch gekennzeichnet, daß die verstärkende Lichtleitfaser (L, L') eine Lichtleitfaser ist, die mit Erbium dotiert ist.

6. Verstärker nach einem der Ansprüche 1 bis 5, dadurch gekennzeichnet, daß der optische Isolator ein einfacher oder mehrfacher Isolator ist.

## Claims

1. An amplifier having an amplifying optical fiber (L, L'), the amplifier being of the type pumped in co-propagation with the optical signal to be amplified (S) and propagating along said amplifying optical fiber, the amplifier (1) including optical noise reduction means for reducing the optical noise due to amplified spontaneous emission, said means being inserted in the length of the amplifying optical fiber (L, L'),
characterized in that the optical noise reduction means comprise an optical isolator (5) whose position within said amplifying optical fiber is such that said isolator makes it possible to limit gain saturation due to the noise propagating in the opposite direction to the optical signal to be amplified (S).

2. An amplifier according to claim 1, characterized in that said isolator (5) is inserted about halfway along said amplifying fiber (L, L').

3. An amplifier according to claim 1 or 2, characterized in that said amplifying optical fiber (L, L') is 60 meters long and in that said isolator (5) is inserted in said amplifying optical fiber about 25 meters from the beginning of said amplifying optical fiber.

4. An amplifier according to any one of claims 1 to 3, characterized in that the optimum length of said amplifying optical fiber (L, L') corresponds to the gain maximum of said amplifier.

5. An amplifier according to any one of claims 1 to 4, characterized in that said amplifying optical fiber (L, L') is an erbium-doped optical fiber.

6. An amplifier according to any one of claims 1 to 5, characterized in that said optical isolator is single or multiple.
